# EUROPEAN PATENT APPLICATION

(11) **EP 4 725 777 A1**
(43) Date of publication of application: **15.04.2026**
(21) Application number: 24818711.4
(22) Date of filing: 06.06.2024
(51) Int. Cl.: B60S 5/06, B60L 53/80

(54) **BATTERY SWAPPING ROBOT**

(30) Priority: 07.06.2023 CN 202321446382 U
(71) Applicant: Sichuan Zhili Intelligent Energy Technology Co., Ltd., Yibin, Sichuan 644005 (CN)
(72) Inventor: LI, Liguo, Yibin, Sichuan 644005 (CN); SUN, Songwei, Yibin, Sichuan 644005 (CN); ZHANG, Yuliang, Yibin, Sichuan 644005 (CN)
(74) Representative: JD&P Patent Attorneys Joanna Dargiewicz & Partners
(86) International application number: PCT/CN2024/097645
(87) International publication number: WO 2024/251179

(57) **Abstract**

A battery swapping robot, including a lifting device (5) and a telescopic device (1) mounted on the lifting device (5). The lifting device (5) includes a bottom frame (51) and a top frame (52) which are arranged in parallel to each other. The telescopic device (1) includes a mounting arm (11) rotatably connected below the top frame (52) and a lifting arm (13) slidably connected to the mounting arm (11), with the lifting arm (13) provided with a battery gripper (14). An adjustable angle of the telescopic device of the battery swapping robot enables more accurate and efficient battery swapping.

## Description

### TECHNICAL FIELD

The present disclosure relates to the technical field of battery swapping, and in particular, to a battery swapping robot.

### BACKGROUND

With the increasing maturity of new energy technologies, battery-swapping heavy-duty trucks are gradually entering the public view. Most of the heavy-duty trucks employ a top-lift approach for battery swapping, as the swappable battery packs used by the heavy-duty trucks are larger in both weight and volume compared to conventional battery packs. However, the existing battery swapping modes still have high requirements for parking positions of battery-swapping heavy-duty trucks. In fact, when a driver parks a heavy-duty truck awaiting battery replacement at a battery swapping station, the front and rear positions and the heading direction of the heavy-duty truck are not very accurate,. Consequently, whether through repeated repositioning by the driver or through angular and positional adjustments by the existing battery swapping robot, a considerable amount of time is required to align a battery gripper with a battery pack, which inevitably reduces the battery swapping efficiency. For another example, in the battery swapping device disclosed in the Chinese Utility Model Patent No. CN217574933U published on October 14, 2022, a lifting mechanism is flexibly connected to a boom by means of a chain or a wire rope to accommodate a parking angle error of a heavy-duty truck. However, it is not difficult to understand that if an included angle is formed between the horizontal boom and the battery pack, the battery pack may shake when lifting the depleted battery pack, or aligning the fully charged battery pack during placement may become difficult. In other words, the flexible connection may lead to an unreliable seating position of the battery pack and create potential safety hazards due to shaking during handling. In the prior art, there is also a battery swapping technology in which a boom itself can rotate around a rotating shaft. However, because the main function of the boom is to bear load, taking the rotating shaft as a load-bearing point for the boom may undoubtedly lead to progressive wear between the rotating shaft and a shaft sleeve, which will inevitably reduce the accuracy of angle adjustment of the rotating shaft in the long run.

### SUMMARY

### Technical Problem

In the prior art, because the main function of the boom is to bear load, taking the rotating shaft as a load-bearing point for the boom may undoubtedly lead to increasing looseness between the rotating shaft and a shaft sleeve, which will inevitably reduce the accuracy of angle adjustment of the rotating shaft in the long run.

### Technical Solution

In view of the defects in the prior art, an objective of the present disclosure is to provide a battery swapping robot capable of automatically adjusting a deflection angle of a telescopic arm and making battery swapping more accurate and efficient.

In order to achieve the objective, the present disclosure adopts the following technical scheme:
A battery swapping robot is provided, including a lifting device and a telescopic device mounted on the lifting device, where the lifting device includes a bottom frame and a top frame which are arranged in parallel to each other, and the telescopic device includes a mounting arm rotatably connected below the top frame and a lifting arm slidably connected to the mounting arm, with the lifting arm provided with a battery gripper.

Further, the top frame is provided with a hinge part at a central portion, and a middle portion of the mounting arm is rotatably connected to the hinge part via a rotating shaft.

Further, the top frame is provided with two mounting parts arranged oppositely at both sides of the hinge part, and both ends of the mounting arm are movably connected to the mounting parts, respectively.

Further, the top frame further includes connecting parts connected to the two ends of the two mounting parts, respectively, where the mounting parts and the connecting parts form a frame, a first driving device is provided between at least one end of the mounting arm and the connecting part, and the first driving device is configured to drive the mounting arm to rotate relative to the top frame.

Further, the mounting arm of the telescopic device is provided with a roller at each end, the mounting part of the top frame is provided with a limit slot, and the limit slot is configured to limit a movement direction of the roller.

Further, the limit slot has a U-shaped cross section, the limit slot has a bottom wall fixed onto the mounting part and two side walls located at both sides of the bottom wall, the side wall has a circular arc-shaped outer edge, and the diameter of the circular arc is smaller than the length of the mounting arm.

Further, the mounting part is provided with an anti-disengagement slot at the other side where the guide rail is mounted, and the mounting arm is provided with an anti-disengagement fastener extending towards the roller and extending into the anti-disengagement slot.

Further, the mounting arm is provided with a mounting plate at each end, and the anti-disengagement fastener and the roller are removably fixed onto the mounting plate via bolts.

Further, the telescopic device further includes a telescopic arm arranged between the mounting arm and the lifting arm, with the telescopic arm slidably connected to the mounting arm and the lifting arm, respectively.

Further, the telescopic arm is provided with a first slide rail and a second slide rail which are parallel to each other in a length direction of the telescopic arm, the mounting arm is provided with a plurality of first guide rollers, the lifting arm is provided with a plurality of second guide rollers, the mounting arm is slidably connected to the telescopic arm via the first guide rollers and the first slide rail, and the lifting arm is slidably connected to the telescopic arm via the second guide rollers and the second slide rail.

Further, the mounting arm is also provided with a second driving device for driving the lifting arm and the telescopic arm to slide relative to the mounting arm.

The present disclosure also adopts the following technical scheme to achieve the aforementioned objective:
A battery swapping robot is provided, including a lifting device and a telescopic device mounted on the lifting device, where the lifting device includes a bottom frame and a top frame which are arranged in parallel to each other, and the telescopic device includes a mounting arm rotatably connected to the top frame and a lifting arm slidably connected to the mounting arm, the lifting arm being movable between a first operative position located at one side of the lifting device and a second operative position located at the other side of the lifting device, and the lifting arm being provided with a battery gripper.

Further, the top frame is provided with a hinge part, and the mounting arm is rotatably connected to the hinge part via a rotating shaft.

Further, the top frame is provided with two mounting parts arranged oppositely at both sides of the hinge part, and both ends of the mounting arm are movably connected to the mounting parts, respectively.

### Beneficial Effects

By adopting the aforementioned technical schemes, the present disclosure has the beneficial effects as follows:

The battery swapping robot has the function of adjusting the angle of the telescopic device, and the battery gripper itself does not need to be provided with a rotating mechanism. Because the lifting device is adopted to lift the telescopic device on the whole, the use of flexible chains or steel cables is reduced, the safety and accuracy are improved, and the requirements for parking positions of drivers are reduced, achieving a more stable, reliable and efficient battery swapping effect.

### BRIEF DESCRIPTION OF THE DRAWINGS

FIG. 1 is a three-dimensional schematic diagram of a power swapping robot provided by an embodiment of the present disclosure.
FIG. 2 is a three-dimensional schematic diagram of a power swapping robot shown in FIG. 1 from another perspective.
FIG. 3 is a partial top view of a power swapping robot shown in FIG. 1.
FIG. 4 is a partial side view of a power swapping robot shown in FIG. 1.
FIG. 5 is a partial enlarged schematic diagram of area A shown in FIG. 1.
FIG. 6 is a partial enlarged schematic diagram of area B shown in FIG. 2.
FIG. 7 is a partial enlarged schematic diagram of area C shown in FIG. 1.
FIG. 8 is a partial enlarged schematic diagram of area D shown in FIG. 2.
FIG. 9 is a partial schematic structural diagram of one end of a mounting arm shown in FIG. 1.

In the figures:
1. telescopic device; 11. mounting arm; 12. telescopic arm; 13. lifting arm; 14. battery gripper; 16. cable carrier; 101. mounting plate; 104. anti-disengagement fastener; 105. anti-disengagement hook; 110. roller; 111. first guide roller; 121. first slide rail; 122. second slide rail; 132. second guide roller; 2. rail; 31. first driving device; 310. transmission shaft; 32. second driving device; 40. rotating shaft; 5. lifting device; 50. limit slot; 51. bottom frame; 52. top frame; 501. bottom wall; 502. side wall; 503. outer edge; 504. anti-disengagement slot; 521. mounting part; 522. connecting part; 523. hinge part; 123. rack; 133. rack.

### DETAILED DESCRIPTION OF THE EMBODIMENTS

Embodiments of the present disclosure will be described in detail below, and examples of the embodiments are shown in the accompanying drawings. The embodiments described in reference with the accompanying drawings are exemplary and intended to explain the present disclosure, but cannot be construed as limiting the present disclosure. In the description of the present disclosure, unless otherwise specifically regulated and defined, terms such as "coupled," "connected," and "fixed" should be interpreted broadly. For example, they may refer to fixed connections or detachable connections or integral connections; they may refer to mechanical connections or electrical connections; they may refer to direct connection or indirect connections through intermediate media, or may refer to inner communication of two elements or interaction between two elements. Those of ordinary skill in the art can understand the specific meanings of the above terms in the present disclosure according to specific situations.

In the present disclosure, unless otherwise specifically regulated and defined, a first feature being "on" or "under" a second feature may include that the first feature is in direct contact with the second feature, or may include that the first feature is in indirect contact with the second feature through an additional feature therebetween. Moreover, the first feature being "on," "above," or "over" the second feature includes that the first feature is directly above or diagonally above the second feature, or may simply indicate that the horizontal height of the first feature is greater than that of the second feature. The first feature being "under," "below," and "beneath" the second feature includes that the first feature is directly below or diagonally below the second feature, or may simply indicate that the horizontal height of the first feature is less than that of the second feature.

### Best Mode of the Present Disclosure

The technical schemes of the present disclosure will be further explained through specific implementations in conjunction with the accompanying drawings.

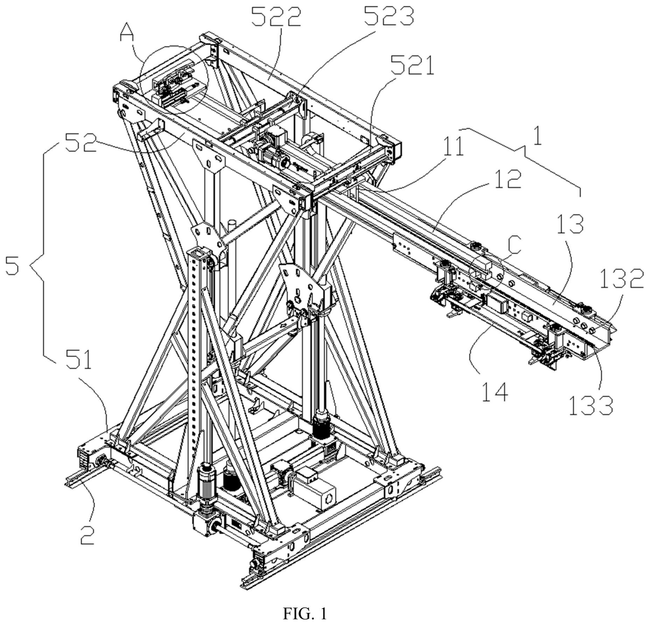

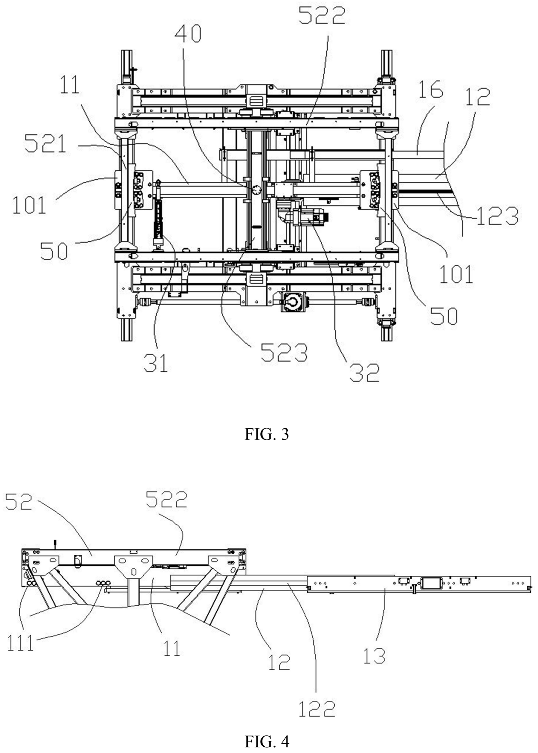

Referring to FIGS. 1 and 4, an embodiment of the present disclosure provides a battery swapping robot, including a lifting device 5 and a telescopic device 1 mounted on the lifting device 5. The lifting device 5 includes a bottom frame 51 and a top frame 52 which are arranged in parallel to each other. The telescopic device 1 includes a rigid mounting arm 11 rotatably connected to the top frame 52 and located at the lower side of the top frame 52, a rigid telescopic arm 12 slidably connected to the mounting arm 11, and a rigid lifting arm 13 slidably connected to the telescopic arm 12. The lifting arm 13 is provided with a battery gripper 14. The telescopic arm 12 can extend from the two ends of the mounting arm 11, and the lifting arm 13 can also extend beyond the two ends of the mounting arm 11, respectively. That is to say, the battery swapping robot has a bidirectional operation space. In other words, the lifting arm 13 is movable between a first operative position located at one side of the lifting device 5 and a second operative position located at the other side of the lifting device 5. In this embodiment, the telescopic device 1 is a three-stage telescopic device. However, it is not difficult to understand that in other embodiments, if the working range of the telescopic device 1 does not need to be too large, the battery swapping robot can be provided with only the mounting arm 11 and the lifting arm 13. That is, the telescopic mechanism can be set as a two-stage telescopic device. Certainly, if the working distance needs to be far, the telescopic device can also be set as a four-stage telescopic device, etc., which will not repeated here. The battery swapping robot may be mounted on rails 2 in a battery swapping station, to remove a depleted battery pack from a to-be-swapped vehicle parked in the battery swapping station in a hoisting mode and replace the removed battery pack with a fully-charged battery pack.

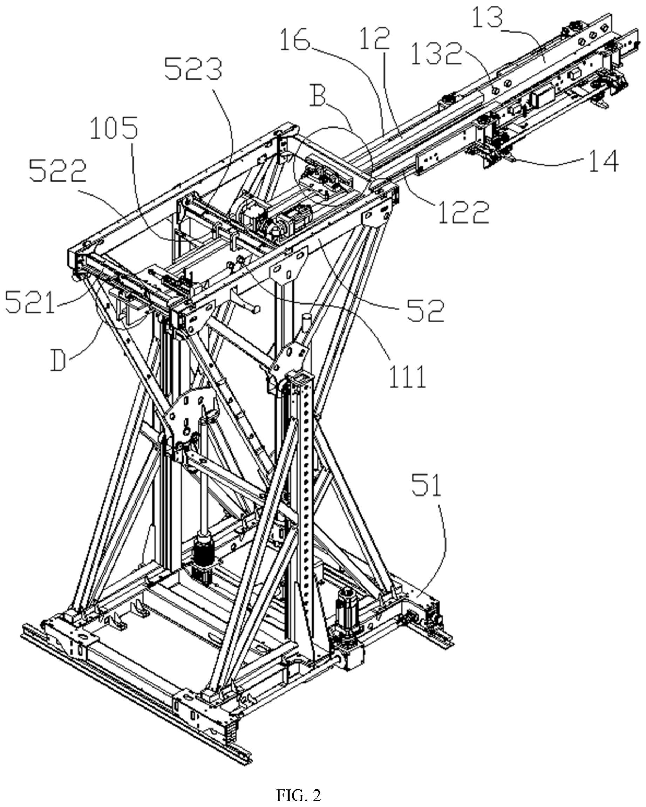

As shown in FIGS. 2 and 3, the top frame 52 includes two mounting parts 521 arranged oppositely and connecting parts 522 connected to the two ends of the two mounting parts 521, respectively. The mounting parts 521 and the connecting parts 522 form a rectangular frame. The two ends of the mounting arm 11 are movably connected to a middle portion of the mounting part 521, respectively, and the mounting arm 11 is made to rotate around the top frame 52 when the two ends move in opposite directions. In order to achieve the above objective, a first driving device 31 is provided between at least one end of the mounting arm 11 and the connecting part 522. The first driving device 31 drives the mounting arm 11 to move in a direction away from or close to the connecting part 522 where the first driving device 31 is mounted, to make the mounting arm 11 rotate relative to the top frame 52, so as to achieve the purpose of adjusting the angle of the telescopic device 1. In other embodiments, two first driving devices 31 are mounted at the two ends of the mounting arm 11, respectively. Especially, the two first driving devices 31 are mounted at the two opposite sides of the mounting arm 11, achieving a better effect of controlling the rotation angle. The first driving device 31 is preferably a combination of a motor and a transmission shaft 310.

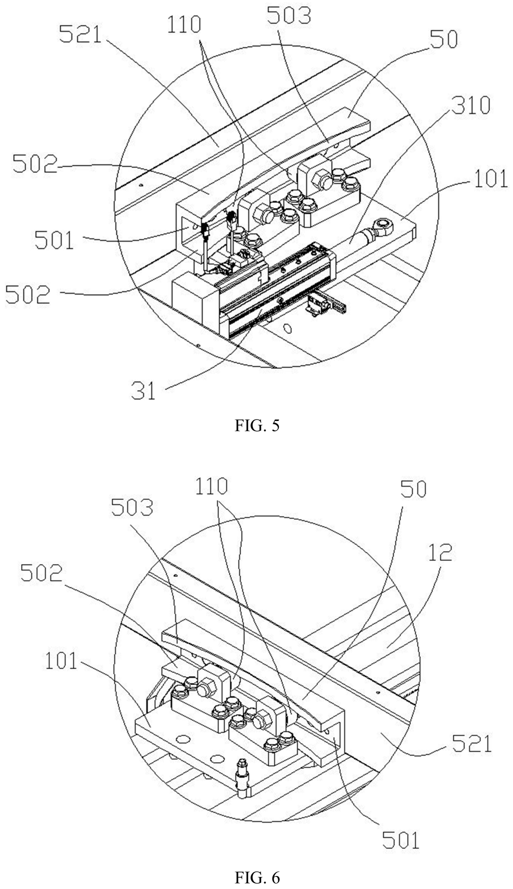

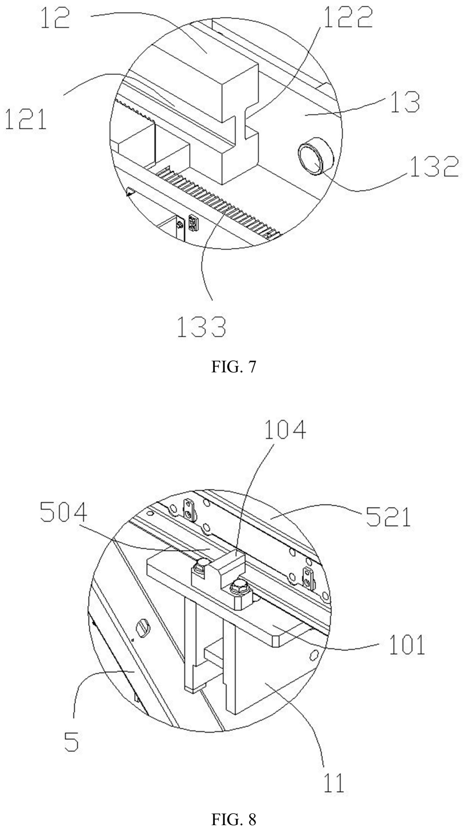

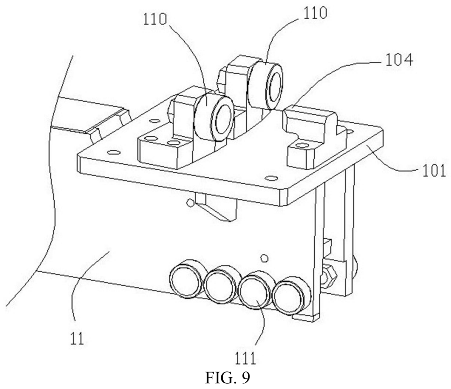

Continuing to refer to FIGS. 5 to 9, the mounting arm 11 of the telescopic device 1 is provided with two rollers 110 at each end, the mounting part 521 of the top frame 52 is provided with a limit slot 50, and the limit slot 50 is configured to limit a movement direction of the roller 110. In this embodiment, there are two limit slots 50 arranged oppositely. The opening of the limit slot 50 faces the inside of the top frame 52 in a horizontal direction, and the limit slot 50 has a C-shaped cross section. The limit slot 50 has a bottom wall 501 fixed onto the mounting part 521 and two side walls 502 located at the upper and lower sides of the bottom wall 501, and the side wall 502 has a circular-arc-shaped outer edge 503. When the mounting arm 11 rotates relative to the top frame 52, the roller 110 rolls along the side wall 502 located at the lower side in the circular arc-shaped limit slot 50, and the circular arc-shaped outer edge 503 of the side wall 502 plays a role in limiting the movement range of the mounting arm 11 in the horizontal direction. In other embodiments, the limit slot 50 may also be set to have an opening facing upwards. In this case, the limit slot 50 needs to be designed in a circular-arc shape on the whole, and the roller 110 needs to be set to roll along the bottom wall 501.

It is worth mentioning that in the above-mentioned embodiment, each of the side walls 502 has a circular arc-shaped outer edge 503, and the diameter of the circular arc is smaller than the length of the mounting arm 11. In addition to playing a guiding role, the limit slot 50 also plays a bearing role. That is to say, the telescopic device 1 may transfer the weight of the hoisted battery pack to the roller 110 and share the weight with the limit slot 50. Preferably, the top frame 52 further includes a hinge part 523 arranged between the two mounting parts 521. A middle portion of the mounting arm 11 is rotatably connected to a middle portion of the hinge part 523 via a rotating shaft 40. In this case, the center of a circle where the circular arc-shaped outer edges 503 of the limit slots 50 formed in the two mounting parts 521 is located is preferably the center of the rotating shaft 40, and the existence of the rotating shaft 40 makes the rotating accuracy of the mounting arm 11 more controllable. In another embodiment, only one limit slot 50 may be formed in one mounting part 521, a roller 110 is arranged at one end of the mounting arm 11, and the other end of the mounting arm 11 is directly mounted on the other mounting part 521 via a rotating shaft 40, achieving the purpose of angle adjustment as well.

In this embodiment, because the mounting arm 11 is made of rigid material, when the battery gripper 14 lifts the battery pack, three parts, namely the side wall 502 at the lower side of the limit slot 50 close to one side of the battery pack, the rotating shaft 40, and the side wall 502 at the upper side of the limit slot 50 far away from one side of the battery pack, will jointly form a fulcrum, so the stress on the mounting arm 11 will be more reasonable compared with adjusting the angle of the telescopic device 1 simply by setting a turntable. In this case, any end of the mounting arm 11 is pushed by the first driving device 31 to enable the roller 110 to roll in the limit slot 50, so the precise rotation of the telescopic device 1 can be easily achieved. It is not difficult to understand that the range of angle at which the mounting arm 11 rotates around the top frame 52 is limited by the length of the circular arc-shaped outer edge 503 of the limit slot 50. It is easily conceivable that a limiting stop block can also be provided in the limit slot 50.

Further, the mounting part 521 is provided with an anti-disengagement slot 504 at the other side where the limit slot 50 is formed, and the mounting arm 11 is provided with an anti-disengagement fastener 104 extending towards the roller 110. The anti-disengagement fastener 104 extends into the anti-disengagement slot 504. When the load borne by the limit slot 50 meets a preset range, the anti-disengagement fastener 104 does not come into contact with the anti-disengagement slot 504, but there is a small gap between the two, for example, a gap of one to two millimeters. However, when the limit slot 50 bears a weight exceeding the design load, the anti-disengagement fastener 104 may be directly supported by the mounting part 521. That is to say, the anti-disengagement fastener 104 may play the role of preventing the limit slot 50 from deforming and the roller 110 from disengaging from the limit slot 50, making battery swapping safer and more reliable. In addition, the mounting arm 11 is also provided with anti-disengagement hooks 105 near the position where the rotating shaft 40 is mounted. Preferably, there are four anti-disengagement hooks 105 distributed around the rotating shaft 40, to prevent the rotating shaft 40 from disengaging from a middle portion of the hinge part 523. Further, the mounting arm 11 is provided with a mounting plate 101 at each end, and the anti-disengagement fastener 104 and the roller 110 are removably fixed onto the mounting plate 101 via bolts.

### Implementation of the Present Disclosure

The telescopic arm 12, in a length direction thereof, is provided with a first slide rail 121 and a second slide rail 122 which are parallel to each other, the mounting arm 11 is provided with a plurality of first guide rollers 111, the lifting arm 13 is provided with a plurality of second guide rollers 132, the mounting arm 11 is slidably connected to the telescopic arm 12 via the first guide rollers 111 and the first slide rail 121, and the lifting arm 13 is slidably connected to the telescopic arm 12 via the second guide rollers132 and the second slide rail 122. In other embodiments, the positions of the guide rollers and the slide rails can be interchanged. That is, the slide rails are arranged on the mounting arm 11 and the lifting arm 13, and the guide rollers are arranged on the telescopic arm 12. Preferably, the first guide rollers 111 and the second guide rollers 132 are provided in groups. For example, one group is composed of two or three guide rollers, so as to better transmit power and reduce friction. In this embodiment, the mounting arm 11 is also provided with a second driving device 32 for driving the telescopic arm 12 and the lifting arm 13 to slide relative to the mounting arm 11. A rack 123 is provided between the mounting arm 11 and the telescopic arm 12, and a rack 133 is also provided between the telescopic arm 12 and the lifting arm 13. The second driving device 32 can be matched with the rack 123 and the rack 133 to accurately control the working length of the telescopic device 1. The rack 123 and the rack 133 can also be set as chains, and a driving force is generated preferably by the gear driven by the second driving device 32. A cable carrier 16 is also provided between the lifting arm 13 and the top frame 52. The cable carrier 16 is configured to supply power to the battery gripper 14 and to output control signals. One end of the cable carrier 16 is connected to the battery gripper 14, and the other end is fixed to the top frame 52 and connected to the bottom frame 51 via a wire harness. Preferably, the bottom frame 51 is provided with a control module (not numbered).

### Industrial Applicability

The angle of the telescoping device 1 of the battery swapping robot that meets the requirements of the present disclosure is precisely adjustable. As a result, the battery gripper 14 itself may not have an angle adjustment function. Moreover, because the lifting device 5 is adopted to make the telescoping device 1 drive the battery gripper 14 to lift on the whole, the distance between the battery gripper 14 and the telescopic device 1 in a vertical direction is fixed, the use of flexible chains or steel cables is reduced, the safety and accuracy are improved, and the requirements for a parking position of a driver are reduced, achieving a more stable, reliable, and efficient battery swapping effect.

The above implementations only illustrate the basic principles and characteristics of the present disclosure, and the present disclosure is not limited by the above-mentioned implementations. Various modifications and changes may be made to the present disclosure on the premise of not departing from the spirit and scope of the present disclosure. All such modifications and changes fall within the claimed scope of the present disclosure. The claimed scope of the present disclosure is defined by the appended claims and their equivalents.

## Claims

1. A battery swapping robot, comprising a lifting device (5) and a telescopic device (1) mounted on the lifting device (5), wherein the lifting device (5) comprises a bottom frame (51) and a top frame (52) which are arranged in parallel to each other, and the telescopic device (1) comprises a mounting arm (11) rotatably connected below the top frame (52) and a lifting arm (13) slidably connected to the mounting arm (11), the lifting arm (13) being provided with a battery gripper (14).

2. The battery swapping robot according to claim 1, wherein the top frame (52) is provided with a hinge part (523) at a central portion, and a middle portion of the mounting arm (11) is rotatably connected to the hinge part (523) via a rotating shaft (40).

3. The battery swapping robot according to claim 2, wherein the top frame (52) is provided with two mounting parts (521) arranged oppositely at both sides of the hinge part (523), and both ends of the mounting arm (11) are movably connected to the mounting parts (521), respectively.

4. The battery swapping robot according to claim 3, wherein the top frame (52) further comprises connecting parts (522) connected to the two ends of the two mounting parts (521), respectively, the mounting parts (521) and the connecting parts (522) form a rectangular frame, a first driving device (31) is provided between at least one end of the mounting arm (11) and the connecting part (522), and the first driving device (31) is configured to drive the mounting arm (11) to rotate relative to the top frame (52).

5. The battery swapping robot according to claim 3, wherein the mounting arm (11) is provided with a roller (110) at each end, the mounting part (521) of the top frame (52) is provided with a limit slot (50), and the limit slot (50) is configured to limit a movement direction of the roller (110).

6. The battery swapping robot according to claim 5, wherein the limit slot (50) has a U-shaped cross section, the limit slot (50) has a bottom wall (501) fixed onto the mounting part (521) and two side walls (502) located at both sides of the bottom wall (501), the side wall (502) has a circular arc-shaped outer edge (503), and a diameter of the circular arc is smaller than a length of the mounting arm (11).

7. The battery swapping robot according to claim 5, wherein the mounting part (521) is provided with an anti-disengagement slot (504) at the other side where the limit slot (50) is formed, and the mounting arm (11) is provided with an anti-disengagement fastener (104) extending towards the roller (110) and extending into the anti-disengagement slot (504).

8. The battery swapping robot according to claim 7, wherein the mounting arm (11) is provided with a mounting plate (101) at each end, and the anti-disengagement fastener (104) and the roller (110) are removably fixed onto the mounting plate (101) via bolts.

9. The battery swapping robot according to any one of claims 2 to 8, wherein the telescopic device (1) further comprises a telescopic arm (12) arranged between the mounting arm (11) and the lifting arm (13), and the telescopic arm (12) is slidably connected to the mounting arm (11) and the lifting arm (13), respectively.

10. The battery swapping robot according to claim 9, wherein the telescopic arm (12) is provided with a first slide rail (121) and a second slide rail (122) which are parallel to each other in a length direction of the telescopic arm (12), the mounting arm (11) is provided with a plurality of first guide rollers (111), the lifting arm (13) is provided with a plurality of second guide rollers (132), the mounting arm (11) is slidably connected to the telescopic arm (12) via the first guide rollers (111) and the first slide rail (121), and the lifting arm (13) is slidably connected to the telescopic arm (12) via the second guide rollers (132) and the second slide rail (122).

11. The battery swapping robot according to claim 9, wherein the mounting arm (11) is also provided with a second driving device (32) for driving the lifting arm (13) and the telescopic arm (12) to slide relative to the mounting arm (11).

12. A battery swapping robot, comprising a lifting device (5) and a telescopic device (1) mounted on the lifting device (5), wherein the lifting device (5) comprises a bottom frame (51) and a top frame (52) which are arranged in parallel to each other, and the telescopic device (1) comprises a mounting arm (11) rotatably connected below the top frame (52) and a lifting arm (13) slidably connected to the mounting arm (11), the lifting arm (13) being movable between a first operative position located at one side of the lifting device (5) and a second operative position located at the other side of the lifting device (5), and the lifting arm (13) being provided with a battery gripper (14).

13. The battery swapping robot according to claim 12, wherein the top frame (52) is provided with a hinge part (523), and the mounting arm (11) is rotatably connected to the hinge part (523) via a rotating shaft (40).

14. The battery swapping robot according to claim 13, wherein the top frame (52) is provided with two mounting parts (521) arranged oppositely at both sides of the hinge part (523), and both ends of the mounting arm (11) are movably connected to the mounting parts (521), respectively.
